# EUROPÄISCHE PATENTSCHRIFT

(11) **EP 2 649 282 B1**
(45) Veröffentlichungstag und Bekanntmachung des Hinweises auf die Patenterteilung: **04.11.2020**
(21) Anmeldenummer: 11822885.7
(22) Anmeldetag: 08.12.2011
(51) Int. Cl.: F02B 19/10, F02B 19/14

(54) **VERFAHREN ZUR ZÜNDUNG VON KRAFTSTOFF IN EINEM VERBRENNUNGSMOTOR MIT KOMPRESSIONSINDUZIERTER SELBSTZÜNDUNG**
METHOD FOR IGNITING FUEL IN A COMPRESSED SELF-IGNITION TYPE INTERNAL COMBUSTION ENGINE
PROCÉDÉ D'ALLUMAGE DE CARBURANT D'UN MOTEUR À COMBUSTION INTERNE DE TYPE À AUTOALLUMAGE COMPRIMÉ

(30) Priorität: 08.12.2010 DE 102010054384
(43) Veröffentlichungstag der Anmeldung: 16.10.2013
(73) Patentinhaber: Hinken, Franz-Josef, 49186 Bad Iburg (DE)
(72) Erfinder: Hinken, Franz-Josef, 49186 Bad Iburg (DE)
(74) Vertreter: Bossmeyer, Jörg Peter
(86) Internationale Anmeldenummer: PCT/DE2011/002090
(87) Internationale Veröffentlichungsnummer: WO 2012/095071

(56) Entgegenhaltungen:
- WO-A1-99/42718
- WO-A1-2007/006062
- DE-A1- 19 638 024
- GB-A- 207 181
- US-A- 3 905 343
- US-A- 4 116 234

## Beschreibung

Die Erfindung betrifft ein Verfahren zur Zündung von Kraftstoff in einem Verbrennungsmotor mit kompressionsinduzierter Selbstzündung nach dem Oberbegriff des Patentanspruches 1.

Die Wirkungsgrade von Verbrennungsmotoren sowie deren Schadstoffausstoß sind auch heute noch unbefriedigend, obwohl erhebliche Mittel zum Einsatz kommen und intensive Forschungen betrieben werden, um hier Abhilfe zu schaffen.

Die weiter zunehmende Verbreitung des Verbrennungsmotors sowie die steigenden Zulassungszahlen bei Kraftfahrzeugen veranlassten die Gesetzgebungen weltweit, die Abgasemissionen zunehmend zu reduzieren. Grundsätzlich werden zwei unterschiedliche Motorenkonzepte unterschieden.

Der Ottomotor zeichnet sich durch die Verbrennung eines Gemisches von Luft und Kraftstoff innerhalb einer turbulenten Flammzone aus, die sich, initiiert von einem Zündfunken, durch das Gemisch bewegt.

Im Dieselmotor hingegen bildet sich durch Einspritzung von flüssigem Kraftstoff in hochkomprimierte, heiße Luft ein inhomogenes Gemisch, welches von selbst zündet.

Das Bestreben im modernen Motorenbau geht dahin, eine möglichst homogene Gemischbildung zu erreichen, um die Verbrauchs- und Abgaswerte zu optimieren. Ein Beispiel hierfür ist die Homogene Kompressionszündung (engl.: Homogeneous Charge Compression Ignition, abgekürzt: HCCI), die ein Konzept für einen Motor bezeichnet, bei dem die Verbrennung eines homogenen Gemisches gleichzeitig im gesamten Zylinderraum beginnt. Primäres Ziel dieser Entwicklung ist die Senkung des Schadstoffausstoßes. Die Zündung wird dabei durch die bei der Verdichtung steigende Temperatur und gegebenenfalls im Zylinderraum verbleibende Radikale ausgelöst. Im HCCI-Motor soll die Ladungszusammensetzung jedoch möglichst so gleichmäßig sein, dass die Verbrennung im gesamten Zylinderraum gleichzeitig beginnt. Dies trifft insbesondere beim Einsatz von Dieselkraftstoff zu, führt jedoch leider noch immer zu den verschiedenen ungelösten Problemen dieses Brennverfahrens.

Ein ganz wesentlicher Nachteil der heute im Einsatz befindlichen Verbrennungsmotoren besteht zum Beispiel darin, dass bei der Gemischbildung eine Wandauftragung von Kraftstoff erfolgt. Dies ist auf die geringen Druckverhältnisse (100° KW vor dem oberen Totpunkt (OT)) im Zylinder und dem zu geringen Abstand der Einspritzdüse vom Kolbenboden und von der Zylinderwand zurückzuführen und bewirkt eine inhomogene Gemischbildung, die zu einer unkontrollierten Selbstzündung führt. Ferner steigen dadurch die Schadstoffemissionen überproportional an und der Kraftstoffverbrauch erhöht sich.

Umfangreiche Untersuchungen finden auch statt, um den optimalen Zündzeitpunkt zu ermitteln beziehungsweise eine Steuerung des wirkungsgradoptimalen Zündzeitpunktes durch die Kompression in allen Lastbereichen zu erreichen. Leider sind die Ergebnisse jedoch bis heute unbefriedigend, da es häufig zu Druckspitzen und

Zylinderraumdruckschwingungen kommt und weiterhin hohe HC- und CO-Emissionen zu verzeichnen sind. Ein besonderes Problem des HCCI-Verfahrens ist das mangelhafte Kaltstart- und Leerlaufverhalten.

Weiterhin sind die steilen Druckanstiege und Zylinderraumdruckschwingungen im oberen Lastbereich nicht akzeptabel, die durch die kompressionsinduzierte Selbstzündung zu verzeichnen sind.

Aus der DE-PS 967752 ist bereits ein Verbrennungsmotor als Hubkolbenmaschine bekannt, in dem ein über eine Pleuelstange mit einer Kurbelwelle verbundener Kolben translatorisch bewegbar ist, wobei ein Zylinderkopf die obere Begrenzung eines Zylinderraumes in dem Zylinder bildet. Der Zylinderraum ist bei dieser Ausführung so ausgebildet, dass er eine zylinderkopfseitige Erweiterung aufweist, die kegelförmig oder paraboloid ausgeführt ist und an deren oberer, dem Kolbenboden abgewandten Seite die Einspritzdüse angeordnet ist. Nach dem Offenbarungsgehalt der Schrift soll der Kraftstoff dabei gegen Ende des Verdichtungshubes durch die Einspritzdüse in einem Strahlkegel auf den heißen Boden des Kolbens gespritzt werden, so dass er teilweise wieder zurückprallt und in eine im Zylinderraum erzeugte Wirbelzone reflektiert wird. Die Wirbelzone wird durch Vertiefungen im Kolbenboden erreicht. Die eigentliche Zündung des Kraftstoffs erfolgt hierbei durch eine Kombination aus der von den Wandungen des Zylinderkopfes und des Kolbenbodens abgegebenen Wärme und der Kompressionswärme des Kraftstoff-Luftgemisches. Bei einer derartigen Ausführung ist ein Wandauftrag des Kraftstoffes zur Entzündung des Kraftstoffes sogar explizit erforderlich, was jedoch die eingangs bereits erwähnten Nachteile mit sich bringt und daher vermieden werden sollte.

Auch ein klassischer Vorkammermotor, wie er beispielsweise in der DE-PS 967752, in der WO 99/42718 A1, in der WO 2007/006062 A1 oder in der GB 204551 A beschrieben wird, weist diese Nachteile auf.

Der Erfindung liegt die Aufgabe zugrunde, bei einem Verbrennungsmotor mit kompressionsinduzierter Selbstzündung eine Erhöhung des Wirkungsgrades bei gleichzeitiger Reduzierung der Schadstoffemissionen zu erreichen sowie ein Verfahren bereitzustellen, durch das der Kraftstoff mit maximaler Energieausbeute entzündet werden kann.

Die Erfindung löst diese Aufgabenstellung mit den Merkmalen des unabhängigen Patentanspruchs 1.

Weitere Ausgestaltungen der Erfindung sind Gegenstand der sich jeweils anschließenden Unteransprüche.

Ein Verbrennungsmotor mit kompressionsinduzierter Selbstzündung, als Hubkolbenmaschine, mit wenigstens einem Zylinder, in dem ein über eine Pleuelstange mit einer Kurbelwelle verbundener Kolben translatorisch bewegbar ist, wobei ein Zylinderkopf die obere Begrenzung eines Zylinderraumes in dem Zylinder bildet, wurde dahingehend weitergebildet, dass der Zylinderkopf ein zum Zylinderraum offenes, mit mindestens einer Einspritzdüse ausgestattetes Kompressionsrohr aufweist.

Die erfindungsgemäß stattfinde kompressionsinduzierte Selbstzündung eines homogenen Kraftstoff-Luftgemisches erfolgt nahezu unter Gleichraumbedingungen. Es hat sich gezeigt, dass bei einer homogenen kompressionsinduzierten Selbstzündung nicht nur die Schadstoffemissionen nahezu bis auf null gesenkt werden können, sondern auch der Wirkungsgrad des Verbrennungsmotors beträchtlich steigt.

Von besonderer Bedeutung ist dabei, dass die Mischung des Kraftstoff-Luftgemisches anteilig im Zylinderraum und im Kompressionsrohr erfolgt. Während des Kompressionshubes wird der Kraftstoff durch das Kompressionsrohr teilweise in den Zylinderraum gespritzt, ohne dass dabei eine Wandbenetzung stattfindet.

Im Kompressionsrohr ist in der Verdichtungsphase ein starker Druckanstieg zu verzeichnen, was aus der in Relation zur Kolbenfläche geringen Querschnittsfläche des Kompressionsrohres resultiert, weshalb zur Verdeutlichung auch der Begriff "Rohr" verwendet wird. Dies führt jedoch auch dazu, dass der Druckausgleich zwischen Kompressionsrohr und Zylinderraum (12° v. OT. bis 12° n. OT.) so langsam ist, dass der Druckanstieg im Zylinderraum in allen Last- und Drehzahlbereichen sehr moderat verläuft.

Zudem erzeugt der Kolben im Bereich des oberen Totpunktes (OT) einen Schließeffekt des Kompressionsrohres, so dass ein dadurch verzögerter Druckanstieg im Zylinderraum bewirkt wird. Der maximale Druck auf den Kolben wird immer erst nach OT erreicht.

Weitere Vorteile der Erfindung bestehen darin, dass eine nachweisliche Verringerung der HC- und Co-Emissionen erreicht werden kann. Bei einem gesteuerten Einspritzverlauf kann zudem erreicht werden, dass keine Ansammelung von Kraftstoff-Luftgemisch im Zylinderraum, im Bereich des Steges und der Ventilräume zu verzeichnen ist.

Eine erste Ausgestaltung der Erfindung besteht darin, dass die Querschnittsfläche des Kompressionsrohres 4% bis 10% der Kolbenfläche beträgt.

Mit anderen Worten ist es von wesentlicher Bedeutung, dass die Querschnittsfläche des Kompressionsrohres im Verhältnis zur Kolbenfläche möglichst klein gehalten wird. Diese Maßnahme trägt wesentlich zu dem erfindungsgemäßen Erfolg bei, weil die entstehende Druckwelle bei der Zündung des Kraftstoff-Luftgemisches auf weniger als ein Zehntel der ursprünglichen Kolbenfläche trifft.

Es hat sich zudem herausgestellt, dass ein Längen-Durchmesserverhältnis des Kompressionsrohres zwischen 2 und 6 sehr vorteilhafte Auswirkungen auf den Verlauf der Einspritzung, der Kompression und der Ausbreitung der Druckwelle nach der Zündung des Kraftstoff-Luftgemisches hat.

Dem gemäß sollte das Kompressionsrohr nach diesem weiterführenden Gedanken der Erfindung allgemeinen ausgedrückt möglichst eine größere Länge aufweisen, als der Betrag seiner Breite oder seines Durchmessers ist, also lang und schmal ausgeführt werden.

Um einen Auftrag des Kraftstoffstrahls auf den Kolbenboden zu vermeiden, wird darüber hinaus vorgeschlagen, dass die Einspritzdüse im oberen, dem Zylinderraum abgewandten Ende des Kompressionsrohres angeordnet ist.

So wurde beispielsweise bei einem bereits in Versuchen erprobten Verbrennungsmotor die Einspritzdüse 4 bis 8 cm vom Zylinderraum entfernt im Kompressionsrohr angeordnet, was zu einer ausgesprochen schadstoffarmen und Kraftstoff sparenden Verbrennung geführt hat.

Eine besonders bevorzugte Weiterbildung der Erfindung sieht ferner vor, dass das Kompressionsrohr als rohrförmiger Körper mit kreiszylindrischer Innenmantelfläche ausgeführt ist. Die kreiszylindrische Form des Kompressionsrohres hat den Vorteil, dass während des Einspritzvorganges weniger Luft vom Kraftstoffstrahl mitgerissen wird. In der Folge bildet sich im oberen, die Einspritzdüse aufweisenden Abschnitt des Kompressionsrohres ein fetteres Gemisch, was den Zündvorgang im Kompressionsrohr wesentlich fördert. Darüber hinaus besteht die Möglichkeit, das Kompressionsrohr mit einer leicht kegeligen oder paraboloiden Geometrie auszustatten.

Die einfache Ausführung des Verbrennungsmotors und insbesondere des Kompressionsrohres ermöglicht nicht nur die Ausstattung neuer Motoren mit dieser Einrichtung, sondern darüber hinaus auch die Nachrüstung bereits im Einsatz befindlicher Aggregate. Für diese Zwecke geht ein Vorschlag dahin, das Kompressionsrohr mit der darin angeordneten Einspritzdüse als nachrüstbare Baueinheit auszuführen.

Um eine Benetzung der Wandflächen des Zylinderraumes mit Kraftstoff und damit eine Erhöhung des Kraftstoffverbrauches zu vermeiden sowie den daraus resultierenden negativen Einfluss auf die Abgasemmissionen zu verhindern, sieht eine Ausgestaltung der Erfindung vor, dass der Kolben einen ebenen Kolbenboden aufweist.

Ein ebener Kolbenboden vermeidet unkontrollierbare Verwirbelungen innerhalb des Zylinderraumes, wie sie durch Mulden im Kolbenboden erzeugt werden. Diese Verwirbelungen führen nämlich erfahrungsgemäß dazu, dass das sich entwickelnde Kraftstoff-Luftgemisch in sämtliche Bereiche des Zylinderraumes verteilt und dabei auch auf die Wände trifft. Zudem ist der Kolben einfacher herzustellen und damit kostengünstiger.

Eine Alternative hierzu ist darin zu sehen, dass das Kompressionsrohr zweiteilig ausgeführt ist und ein erster Teil des Kompressionsrohres im Zylinderkopf angeordnet und der zweite Teil des Kompressionsrohres in den Kolbenboden des Kolbens eingebracht ist. Hierbei ist der Kolbenboden folglich mit einer den zweiten Teil des Kompressionsrohres bildenden Ausnehmung versehen. Diese besondere Ausführungsvariante der Erfindung führt zu einer sehr kompakten Bauweise des Motorzylinders.

Insbesondere für die Verarbeitung von Dieselkraftstoff ist es von Vorteil, wenn das Kompressionsrohr eine Vorheizung aufweist. Die Erwärmung des Kompressionsrohres kann sich jedoch auch positiv auf den Verbrennungsprozess eines Ottomotors auswirken. In jedem Fall werden die Kaltstarteigenschaften des Verbrennungsmotors durch diese Maßnahme deutlich verbessert.

Bei dem erfindungsgemäßen Verfahren zur Zündung von Kraftstoff in einem Verbrennungsmotor wird über die Einspritzdüse unter Vermeidung einer Wandbenetzung der Innenwand des Kompressionsrohres ein Kraftstoffstrahl injiziert, wenn sich der Kolben in einer Stellung zwischen 20° KW und 180° KW vor OT befindet.

Die Lösung der eingangs genannten Aufgabenstellung besteht darin, eine sehr frühe Einbringung des flüssigen Kraftstoffes im Kompressionshub zu erreichen, so dass genügend Zeit für eine vollständige Verdampfung und Vermischung des Kraftstoffes mit der im Zylinderraum vorhandenen Luft verbleibt und eine optimale Homogenisierung des Kraftstoff-Luftgemisches erfolgt. Dieses Verfahren ist für die heute bekannten Verbrennungsmotoren einsetzbar.

Die Besonderheiten bei der Verbrennung von Dieselkraftstoff führen dazu, dass eine besondere Ausgestaltung dieses Verfahrens darin besteht, dass hierbei der Kraftstoffstrahl injiziert wird, wenn sich der Kolben in einer Stellung zwischen 20° KW und 60° KW vor OT befindet. In diesem Bereich wurden optimale Ergebnisse erzielt.

Die Besonderheit der Einbringung des Kraftstoffes in das Kompressionsrohr sind darin zu sehen, dass die Einspritzdüse einen dünnen, spitzen und in Richtung Zylinderraum gerichteten Kraftstoffstrahl mit hohem Druck erzeugt, der eine geringe Streuung aufweist. Durch diese Maßnahmen kann erreicht werden, dass eine Wandbenetzung mit Kraftstoff vermieden werden kann. Heutzutage können über die Einspritzdüse Drücke von mehr als 1000 bar erzeugt werden und sind demnach üblich. Die Ausrichtung des Kraftstoffstrahls kann über die konstruktive Gestaltung der Einspritzdüse gesteuert werden. So werden vorliegend insbesondere Einlochdüsen von Vorteil sein.

Der weitere Ablauf des erfindungsgemäßen Verfahrens gestaltet sich so, dass während Kompressionshubes des Kolbens die Einspritzung des Kraftstoffes erfolgt und anschließend das gesamte Kompressionsvolumen des damit erzeugten Kraftstoff-Luftgemisches in das Kompressionsrohr gepresst wird.

Durch diese Maßnahme kann erreicht werden, dass die Selbstzündung und Verbrennung des Kraftstoff-Luftgemisches und ein damit verbundener steiler Druckanstieg im Kompressionsrohr erfolgt, während sich der Kolben im OT oder kurz nach OT befindet.

Da der Kolben den Ausgang des Kompressionsrohres im Bereich zwischen 12° vor OT bis 12° nach OT mehr oder weniger verschließt, findet die Kompressionszündung und der Energieumsatz vollständig im Kompressionsrohr statt, was Gegenstand der Erfindung ist. Die Kompressionszündung des Kraftstoff/Luft-Gemisches kann im Bereich von 15° vor OT bis 15° nach OT erfolgen. Schwankungen von Zyklus zu Zyklus haben dabei keine negativen Auswirkungen auf das Laufverhalten des Motors.

Eine weiterführende Maßnahme besteht darin, dass bei innerer und/oder äußerer Gemischbildung die kompressionsinduzierte Selbstzündung kontrolliert durch Fremdzündung im Kompressionsrohr eingeleitet wird.

Die Fremdzündung des homogenen Kraftstoff-Luftgemisches leitet durch die Flammfront und die damit verbundene Temperatur- und Drucksteigerung im Kompressionsrohr kontrolliert eine kompressionsinduzierte Selbstzündung des restlichen homogenen Gemisches ein.

Als besonderes Merkmal ist auch anzusehen, dass im Leerlauf des Verbrennungsmotors eine Schichtladung im oberen Teil des Kompressionsrohres erfolgen kann.

Zur Verbesserung des Kaltstartverhaltens wird ferner vorgeschlagen, dass in an sich bekannter Weise ein Kaltstart des Verbrennungsmotors mit Hilfe einer Glühkerze/Zündkerze erfolgt.

Ein besonderer Vorteil des erfindungsgemäßen Verfahrens besteht auch darin, dass eine Block- und/oder Mehrfacheinspritzung zum Einsatz kommen kann.

Bei hochoktanigen und schwerentzündlichen Kraftstoffen kann auch die äußere Gemischbildung eingesetzt werden, wobei das Kraftstoff-Luftgemisch ebenfalls durch den Kolben in das Kompressionsrohr gedrückt wird und je nach Last und Kraftstoff-Luft-Verhältnis kompressionsinduziert oder durch Fremdzündung im oberen Teil des Kompressionsrohres gezündet werden kann.

Die Erfindung wird nachfolgend anhand der beigefügten Zeichnungen näher erläutert. Die gezeigten Ausführungsbeispiele stellen keine Einschränkung auf die dargestellten Varianten dar, sondern dienen lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen schematisch stark vereinfachten Schnitt durch einen Zylinder einer ersten Ausführung eines Verbrennungsmotors während des Kompressionshubes,
- Figur 2:: eine Schnittdarstellung gemäß Figur 1, mit zunehmender Kompression und dadurch veränderter Kolbenstellung,
- Figur 3:: eine Schnittdarstellung durch einen Zylinder, bei dem der Kolben kurz vor dem oberen Totpunkt steht,
- Figur 4:: eine Schnittdarstellung mit dem Kolben im oberen Totpunkt,
- Figur 5:: eine Schnittdarstellung eines Zylinders mit einer Stellung des Kolbens während des Expansionshubes
- und Figur 6:: eine weitere Ausführungsvariante eines Verbrennungsmotors mit einem zweiteiligen Kompressionsrohr.

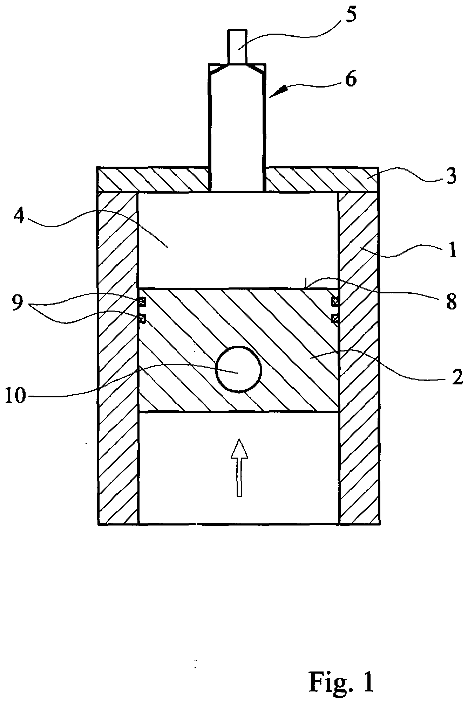

In den Figuren 1-5 sind verschiedene Stadien eines Verbrennungsvorganges innerhalb eines Zylinders 1 eines Verbrennungsmotors dargestellt.

Die Figur 1 zeigt zunächst einen schematisch stark vereinfachten Schnitt durch einen Zylinder 1 eines Verbrennungsmotors während des Kompressionshubes des in dem Zylinder 1 translatorisch bewegbaren Kolbens 2 in einer ersten Stellung. Der Kolben 2 verfügt über ein Pleuellager 10, dass der Verbindung mit einer hier aus Vereinfachungsgründen nicht dargestellten Pleuelstange dient, die ihrerseits die translatorische Bewegung des Kolbens in eine Rotation der Kurbelwelle des Verbrennungsmotors umsetzt. Im Bereich des Kolbenbodens 8 weist der Kolben 2 mehrere Kolbenringe 9 auf, die der Abdichtung des Zylinderraumes 4 innerhalb des Zylinders 1 dienen. Den oberen Abschluss des Zylinders 1 bildet ein Zylinderkopf 3, der als erfindungsgemäße Besonderheit ein Kompressionsrohr 6 aufweist. Am oberen, dem Zylinderraum 4 gegenüberliegenden Ende des Kompressionsrohres 6 ist eine Einspritzdüse 5 in das Kompressionsrohr 6 eingesetzt, die zur Einspritzung des Kraftstoffes dient. Von besonderer Bedeutung ist dabei, dass das Kompressionsrohr 6 eine kreiszylindrische Geometrie aufweist, wobei die Länge des Kompressionsrohres 6 wesentlich größer ist, als sein Durchmesser.

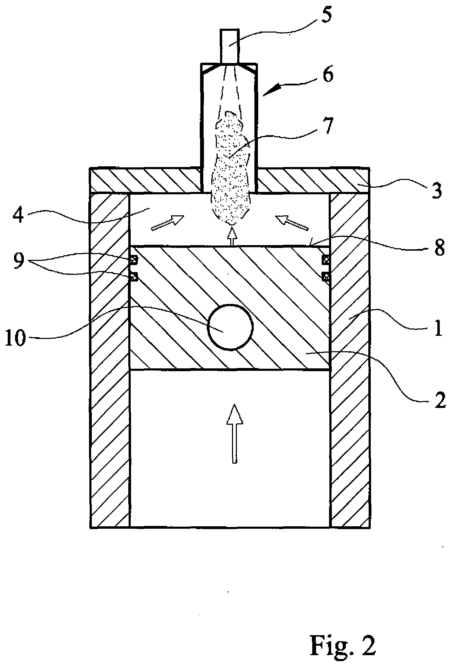

In der Figur 2 hat sich im Vergleich zur Darstellung in Figur 1 der Kolben 2 weiter in Richtung oberer Todpunkt bewegt. Bei dieser Bewegung wird die im Zylinderraum 4 eingeschlossene Luft verdichtet und es erfolgt die Einbringung eines Kraftstoffstrahls 7 über die Einspritzdüse 5. Dabei vermeidet die Geometrie des Kraftstoffstrahls 7 eine Wandauftragung im Kompressionsrohr 6, an der Zylinderinnenwand und am Kolbenboden 8. Der Kraftstoffstrahl 7 hat einen spitzen Verlauf und wird mit hohem Druck eingespritzt. Dabei erfolgt eine Vermischung des Kraftstoffstrahls 7 mit der im Zylinderraum 4 vorhandenen Luft teilweise im Kompressionsrohr 6 und teilweise im Zylinderraum 4.

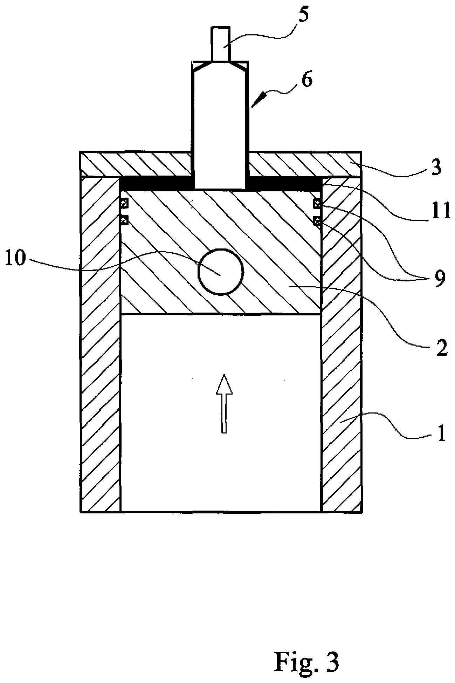

Bei der Darstellung in Figur 3 hat sich der Kolben 2 ein weiteres Stück in Richtung oberer Todpunkt bewegt. Durch diese Bewegung erfolgt ein Transport des Kraftstoff-Luftgemisches 11 in das Kompressionsrohr 6, in dem sich nunmehr das gesamte Volumen des Kraftstoff-Luftgemisches 11 in komprimierter Form befindet. Dabei wird der Einspritzverlauf so gesteuert, dass im Zylinderraum 4 keine Ansammlung des Kraftstoff-Luftgemisches 11 mehr vorhanden ist. Eine derartige Ansammlung würde nämlich zur verstärkten Bildung von HC- und CO-Emissionen führen, was jedoch durch die erfindungsgemäße Lösung vermieden werden soll und kann.

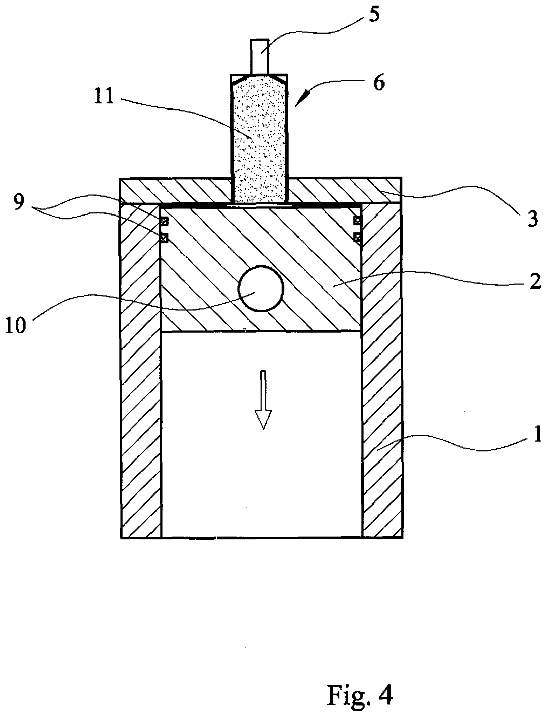

In dem darauf folgenden Schritt, der in der Figur 4 gezeigt wird verschließt der Kolben 2 den zum Zylinderraum 4 offenen Ausgang des Kompressionsrohres 6 nahezu vollständig, was etwa zwischen 10° vor OT bis 10° nach OT erfolgt. Mit der weiter steigenden Temperatur des Kraftstoff-Luftgemisches 11 während des Kompressionshubes erfolgt kurz vor OT oder kurz nach OT die kompressionsinduzierte Selbstzündung innerhalb des Kompressionsrohres 6, in dem sich gleichermaßen auch der gesamte Energieumsatz vollzieht. Die Kompressionszündung läuft im Bereich der Kolbenstellung zwischen 12° vor OT bis 12° nach OT ab. Die sehr kurze Brenndauer des Kraftstoff-Luftgemisches 11 und der daraus resultierende steile Druckanstieg einschließlich der auftretenden Zylinderraumdruckschwingungen finden im Kompressionsrohr 6 statt und bleiben damit im Kompressionsrohr 6 eingeschlossen beziehungsweise werden kompensiert.

Da die Querschnittsfläche des Kompressionsrohres 6 lediglich 4-10 % der Kolbenfläche beträgt, trifft die entstehende Druckwelle auf weniger als 1/10 der Kolbenfläche auf. Der maximale Druck auf den Kolben 2 wirkt dabei immer nach dem oberen Totpunkt (OT), so dass hier eine maximale Leistungsausbeute möglich ist.

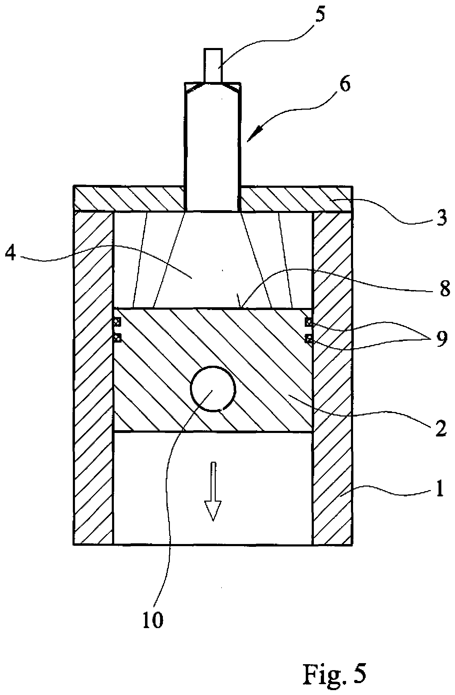

Wie es aus der Darstellung in Figur 5 hervorgeht, bewegt sich im Anschluss an die zuvor beschriebenen Vorgänge der Kolben 2 während seines Expansionshubes abwärts in Richtung unterer Totpunkt (UT) und treibt dabei die Kurbelwelle an, während die gebildeten Verbrennungsrückstände ausgestoßen werden.

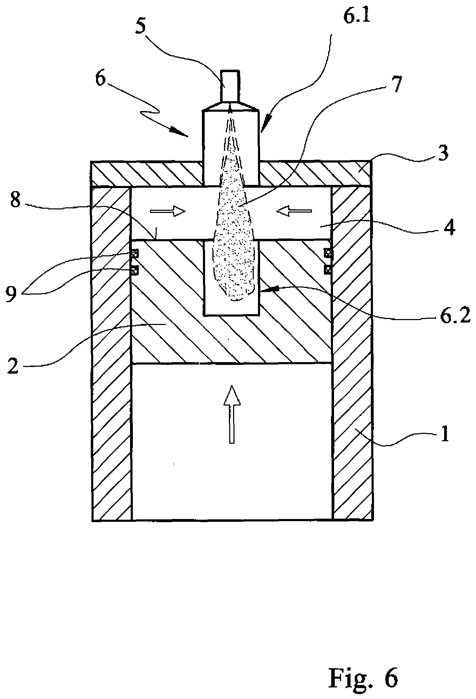

Eine andere Ausführungsvariante des Verbrennungsmotors geht aus der Darstellung in Figur 6 hervor. Der Zylinder 1 und der Zylinderkopf 3 sind dabei baugleich zu der zuvor bereits beschriebenen Ausführungsvariante. Der Kolben 2 ist hierbei während des Kompressionshubes, also bei seiner Bewegung in Richtung OT gezeigt. Auch bei dieser Lösung ist ein Kompressionsrohr 6 vorhanden, das jedoch vorliegend aus zwei Teilen 6.1 und 6.2 besteht. Ein erster Teil 6.1 des Kompressionsrohres 6 wurde im Zylinderkopf 3 und der zweite Teil 6.2 dem ersten Teil 6.1 genau gegenüberliegend im Kolbenboden 8 angeordnet. Eine derartige Maßnahme verhindert in verbesserter Weise eine unerwünschte Wandbenetzung des Zylinderraumes 4 mit Kraftstoff, weil er Kraftstoffstrahl 7 unmittelbar in den zweiten Teil 6.2 des Kompressionsrohres 6 eingebracht wird.

### Bezugszeichenliste:

- 1: Zylinder
- 2: Kolben
- 3: Zylinderkopf
- 4: Zylinderraum
- 5: Einspritzdüse
- 6: Kompressionsrohr
- 6.1: erster Teil des Kompressionsrohres
- 6.2: zweiter Teil des Kompressionsrohres
- 7: Kraftstoffstrahl
- 8: Kolbenboden
- 9: Kolbenringe
- 10: Pleuellager
- 11: Kraftstoff-Luftgemisch

## Patentansprüche

1. Verfahren zur Zündung von Kraftstoff in einem Verbrennungsmotor mit kompressionsinduzierter Selbstzündung, der als Hubkolbenmaschine ausgebildet ist und wenigstens einen Zylinder (1) aufweist, in dem ein über eine Pleuelstange mit einer Kurbelwelle verbundener Kolben (2) translatorisch bewegbar ist, wobei ein Zylinderkopf (3) die obere Begrenzung eines Zylinderraumes (4) in dem Zylinder (1) bildet, und der Zylinderkopf (3) ein zum Zylinderraum (4) offenes, mit mindestens einer Einspritzdüse (5) ausgestattetes Kompressionsrohr (6) aufweist, wobei durch eine Bewegung des Kolbens (2) in Richtung eines oberen Totpunkts (OT) ein Kraftstoff-Luftgemisch (11) in das Kompressionsrohr (6) transportiert und komprimiert wird, sodass mit steigender Temperatur des Kraftstoff-Luftgemisches (11) während dieses Kompressionshubes kurz vor dem, in dem oder kurz nach dem oberen Totpunkt (OT) eine kompressionsinduzierte Selbstzündung innerhalb des Kompressionsrohrs (6) herbeigeführt wird, **dadurch gekennzeichnet, dass** über die Einspritzdüse (5) unter Vermeidung einer Wandbenetzung der Innenwand des Kompressionsrohres (6) ein Kraftstoffstrahl (7) injiziert wird, so dass während des Kompressionshubes der Kraftstoff durch das Kompressionsrohr (6) teilweise in den Zylinderraum (4) gespritzt wird, und dass der Kolben (2) im Bereich des oberen Totpunktes (OT) einen Schließeffekt des Kompressionsrohres (6) erzeugt, so dass ein dadurch verzögerter Druckanstieg im Zylinderraum (4) bewirkt wird.

2. Verfahren nach Anspruch 1, wobei die Querschnittsfläche des Kompressionsrohres (6) 4% bis 10% der Kolbenfläche beträgt.

3. Verfahren nach Anspruch 1 oder 2, wobei das Längen-Durchmesserverhältnis des Kompressionsrohres (6) zwischen 2 und 6 liegt.

4. Verfahren nach einem der vorstehend genannten Ansprüche, wobei die Einspritzdüse (5) im oberen, dem Zylinderraum (4) abgewandten Ende des Kompressionsrohres (6) angeordnet ist.

5. Verfahren nach einem der vorstehend genannten Ansprüche, wobei das Kompressionsrohr (6) rohrförmig ist und eine kreiszylindrische, kegelige oder paraboloide Innenmantelfläche aufweist.

6. Verfahren nach einem der vorstehend genannten Ansprüche, wobei das Kompressionsrohr (6) mit der Einspritzdüse (5) als nachrüstbare Baueinheit ausgeführt sind.

7. Verfahren nach einem der vorstehend genannten Ansprüche, wobei der Kolben (2) einen ebenen Kolbenboden (8) aufweist.

8. Verfahren nach einem der Ansprüche 1 bis 6, wobei das Kompressionsrohr (6) zweiteilig ausgeführt ist und ein erster Teil (6.1) des Kompressionsrohres (6) im Zylinderkopf (3) angeordnet und der zweite Teil (6.2) des Kompressionsrohres (6) in den Kolbenboden (8) des Kolbens (2) eingebracht ist.

9. Verfahren nach einem der vorstehend genannten Ansprüche, wobei bei innerer und/oder äußerer Gemischbildung die kompressionsinduzierte Selbstzündung durch Fremdzündung im Kompressionsrohr (6) kontrolliert eingeleitet wird.

10. Verfahren nach einem der vorstehend genannten Ansprüche, wobei bei Einsatz von Dieselkraftstoff der Kraftstoffstrahl (7) injiziert wird, wenn sich der Kolben (2) in einer Stellung zwischen 20° KW und 60° KW vor OT befindet.

11. Verfahren nach einem der vorstehend genannten Ansprüche, wobei die Einspritzdüse (5) einen dünnen, spitzen und in Richtung Zylinderraum (4) gerichteten Kraftstoffstrahl (7) mit hohem Druck erzeugt, der eine geringe Streuung aufweist.

12. Verfahren nach einem der vorstehend genannten Ansprüche, wobei während des Kompressionshubes des Kolbens (2) die Einspritzung des Kraftstoffes erfolgt und anschließend das gesamte Kompressionsvolumen des damit erzeugten Kraftstoff-Luftgemisches in das Kompressionsrohr (6) gepresst wird.

13. Verfahren nach einem der vorstehend genannten Ansprüche, wobei die Selbstzündung und Verbrennung des Kraftstoff-Luftgemisches und ein damit verbundener steiler Druckanstieg im Kompressionsrohr (6) erfolgt, während sich der Kolben (2) im OT oder kurz nach OT befindet.

14. Verfahren nach einem der vorstehend genannten Ansprüche, wobei im Leerlauf des Verbrennungsmotors eine Schichtladung im oberen Teil des Kompressionsrohres (6) erfolgt.

## Claims

1. Method for igniting fuel in an internal combustion engine with compression-induced auto-ignition, which is designed as a reciprocating piston engine and comprises at least one cylinder (1), in which a piston (2) connected to a crankshaft via a connecting rod is translationally movable, wherein a cylinder head (3) forms the upper boundary of a cylinder chamber (4) in the cylinder (1), and the cylinder head (3) comprises a compression tube (6) open to the cylinder chamber (4), equipped with at least one injection nozzle (5), wherein through a movement of the piston (2) in the direction of an upper dead centre position (UDC) a fuel-air mixture (11) is transported into and compressed in the compression tube (6), so that with rising temperature of the fuel-air mixture (11) during this compression stroke a compression-induced auto-ignition is induced within the compression tube (6) shortly before, at, or shortly after the upper dead centre position (UDC), **characterised in that** a fuel jet (7) is injected through the injection nozzle (3) while avoiding wetting the inner wall of the compression tube (6), so that during the compression stroke the fuel is injected through the compression tube (6) partly into the cylinder chamber (4), and that the piston (2) generates a closing effect of the compression tube (6) in the region of the upper dead centre position (UDC), so that a thereby delayed pressure increase is produced in the cylinder chamber (4).

2. Method according to claim 1, wherein the cross-section area of the compression tube (6) is 4% to 10% of the piston area.

3. Method according to claim 1 or 2, wherein the length-dimeter ratio of the compression tube (6) is between 2 and 6.

4. Method according to any one of the preceding claims, wherein the injection nozzle (5) is arranged in the upper end of the compression tube (6) facing away from the cylinder chamber (4).

5. Method according to any one of the preceding claims, wherein the compression tube (6) is tubular and has a circular-cylindrical, conical or parabolic internal cylindrical surface.

6. Method according to any one of the preceding claims, wherein the compression tube (6) and injection nozzle (5) can be retrofitted as a unit.

7. Method according to any one of the preceding claims, wherein the piston (2) has a flat bottom (8).

8. Method according to any one of claims 1 to 6, wherein the compression tube (2) is formed in two parts and a first part (6.1) of the compression tube (6) is arranged in the cylinder head (3) and the second part (6.2) of the compression tube (6) is introduced into the piston bottom (8) of the piston (2).

9. Method according to any one of the preceding claims, wherein with an internal and/or external mixture formation the compression-induced auto-ignition is initiated in a controlled manner by external ignition in the compression tube (6).

10. Method according to any one of the preceding claims, wherein when diesel fuel is used the fuel jet (7) is injected when the piston (2) is in a position between 20° crankshaft and 60° crankshaft before UDC.

11. Method according to any one of the preceding claims, wherein the injection nozzle (5) generates under high pressure a thin, narrow fuel jet (7) directed towards the cylinder chamber (4), which jet has only a slight dispersion.

12. Method according to any one of the preceding claims, wherein the injection of the fuel takes place during the compression stroke of the piston (2) and the entire compression volume of the thereby generated fuel-air mixture is then forced into the compression tube (6).

13. Method according to any one of the preceding claims, wherein the auto-ignition and combustion of the fuel-air mixture and a thereby associated sharp rise in pressure in the compression tube (6) occurs, while the piston (2) is in the UDC or shortly after the UDC.

14. Method according to any one of the preceding claims, wherein in the idling phase of the internal combustion engine a mixture stratification takes place in the upper part of the compression tube (6).

## Revendications

1. Procédé d'allumage d'un carburant dans un moteur à combustion avec auto-allumage induit par la compression, qui est conçu comme une machine à pistons alternatifs et qui comprend au moins un cylindre (1) dans lequel un piston (2), relié, par l'intermédiaire d'une bielle, avec un vilebrequin, est mobile en translation, dans lequel une tête de cylindre (3) constitue la limitation supérieure d'une chambre de cylindre (4) dans le cylindre (1), et la tête de cylindre (3) comprend un tube de compression (6), ouvert vers la chambre de cylindre (4), muni d'au moins une buse d'injection (5), dans lequel un déplacement du piston (2) en direction d'un point mort haut (OT) transporte un mélange carburant-air (11) vers le tube de compression (6) et le comprime, de façon à ce que, lorsque la température du mélange carburant-air (11) augmente pendant cette course de compression, un peu avant, pendant ou un peu après le point mort haut (OT), un auto-allumage induit par la compression est provoqué à l'intérieur du tube de compression (6), **caractérisé en ce que**, par l'intermédiaire de la buse d'injection (5), en évitant un mouillage de la paroi interne du tube de compression (6), un jet de carburant (7) est injecté, de façon à ce que, pendant la course de compression, le carburant soit injecté à travers le tube de compression (6) partiellement vers la chambre de cylindre (4) et à ce que le piston (2) génère, au niveau du point mort haut (OT), un effet de fermeture du tube de compression (6), de façon à provoquer une augmentation de pression ainsi retardée dans la chambre de cylindre (4).

2. Procédé selon la revendication 1, dans lequel la surface de section transversale du tube de compression (6) représente 4 % à 10 % de la surface du piston.

3. Procédé selon la revendication 1 ou 2, dans lequel le rapport longueur-diamètre du tube de compression (6) se trouve entre 2 et 6.

4. Procédé selon l'une des revendications précédentes, dans lequel la buse d'injection (5) est disposée dans l'extrémité supérieure du tube de compression (6), opposée à la chambre de cylindre (4).

5. Procédé selon l'une des revendications précédentes, dans lequel le tube de compression (6) est tubulaire et présente une surface d'enveloppe interne de forme cylindrique, troconique ou paraboloïde.

6. Procédé selon l'une des revendications précédentes, dans lequel le tube de compression (6) est, ensemble avec la buse d'injection (5), conçu comme un module pouvant être monté ultérieurement.

7. Procédé selon l'une des revendications précédentes, dans lequel le piston (2) comprend un fond de piston plan (8).

8. Procédé selon l'une des revendications 1 à 6, dans lequel le tube de compression (6) est conçu en deux parties et une première partie (6.1) du tube de compression (6) est disposée dans la tête de cylindre (3) et la deuxième partie (6.2) du tube de compression (6) est insérée dans le fond de piston (8) du piston (2).

9. Procédé selon l'une des revendications précédentes, dans lequel, dans le cas d'une formation du mélange interne et/ou externe, l'auto-allumage induit par la compression est initié de manière contrôlée par un allumage externe dans le tube de compression (6).

10. Procédé selon l'une des revendications précédentes, dans lequel, lors de l'utilisation d'un carburant diesel, le jet de carburant (7) est injecté lorsque le piston (2) se trouve dans une position entre 20° KW et 60° KW avant OT.

11. Procédé selon l'une des revendications précédentes, dans lequel la buse d'injection (5) génère un jet de carburant (7) mince, pointu et orienté dans la direction de la chambre de cylindre (4), qui présente une dispersion réduite.

12. Procédé selon l'une des revendications précédentes, dans lequel, pendant la course de compression du piston (2), a lieu l'injection du carburant puis l'ensemble du volume de compression du mélange carburant-air ainsi généré est pressé vers le tube de compression (6).

13. Procédé selon l'une des revendications précédentes, dans lequel l'auto-allumage et la combustion du mélange carburant-air et une augmentation de pression associée ont lieu dans le tube de compression (6), pendant que le piston (2) se trouve au niveau de l'OT ou un peu avant l'OT.

14. Procédé selon l'une des revendications précédentes, dans lequel, lors de la marche à vide du moteur à combustion, a lieu une charge stratifiée dans la partie supérieure du tube de compression (6).
